# EUROPÄISCHE PATENTSCHRIFT

(11) **EP 3 887 215 B1**
(45) Veröffentlichungstag und Bekanntmachung des Hinweises auf die Patenterteilung: **04.09.2024**
(21) Anmeldenummer: 19812996.7
(22) Anmeldetag: 29.11.2019
(51) Int. Cl.: B60S 1/52, B60S 1/56

(54) **REINIGUNGSVORRICHTUNG MIT EINEM HUBKOLBEN**
CLEANING APPARATUS HAVING A PISTON
ARRANGEMENT DE NETTOYAGE AVEC UN PISTON ALTERNATIF

(30) Priorität: 29.11.2018 DE 102018220582
(43) Veröffentlichungstag der Anmeldung: 06.10.2021
(73) Patentinhaber: Continental Automotive Technologies GmbH, 30175 Hannover (DE)
(72) Erfinder: RINGLER, Dirk, 60488 Frankfurt am Main (DE); SCHÄCKEL, Stefan, 60488 Frankfurt am Main (DE); KRAUSSE, Reiner, 60488 Frankfurt am Main (DE); PRYGUNKOV, Ilja, 60488 Frankfurt am Main (DE)
(74) Vertreter: Continental Corporation
(86) Internationale Anmeldenummer: PCT/EP2019/083158
(87) Internationale Veröffentlichungsnummer: WO 2020/109593

(56) Entgegenhaltungen:
- EP-A1- 0 511 104
- WO-A1-97/04875
- DE-A1- 10 125 898
- DE-A1- 102004 054 230
- DE-A1- 102008 020 879
- FR-A1- 2 796 866
- FR-A1- 3 056 520

## Beschreibung

Fluide Reinigungsvorrichtungen zum Einbau in Kraftfahrzeuge sind weit verbreitet. Wenn dabei aus aerodynamischen oder ästhetischen Gründen ein möglichst unauffälliges Erscheinungsbild gewünscht ist, ist es bekannt, Reinigungsvorrichtungen mit einem federbelasteten druckgesteuerten Hubkolben zu verwenden. Der Hubkolben wird aus einer unbetätigten, normal eingefahrenen und somit verdeckten Ausgangsposition durch einen von einer Fördereinrichtung erzeugten hydraulischen Druck des Reinigungsfluids herausgefahren. Dabei versetzt er eine mit ihm verbundene Sprühdüse lediglich für die Zeit des Reinigungsvorgangs in eine exponierte, ausgefahrene Sprühposition. Nach Abstellen der Fördereinrichtung wird der Hubkolben durch Federkraft selbsttätig in die Ausgangsposition zurückgeschoben.

Eine derartige Reinigungsvorrichtung ist beispielsweise aus FR 2796866 A1 oder FR 3056520 A1 bekannt. Die Reinigungsflüssigkeit wird aus einer räumlich entfernten Fördereinrichtung über eine Zuleitung und einen dezentralen Anschlussstutzen der Reinigungsvorrichtung zugefügt und darin durch einen den Hubkolben durchgreifenden Innenkanal in Richtung einer mit dem Hubkolben verbindbaren Sprühdüse weitertransportiert.

Moderne Kraftfahrzeuge werden zunehmend mit optischen und optoelektronischen Sensoreinrichtungen zur Erfassung der Fahrzeugumgebung wie beispielsweise optischen Kameras, laserbasierten Entfernungsmessgeräten und Dergleichen ausgestattet. Derartige Sensoreinrichtungen müssen funktionsbedingt oft an schwer zugänglichen Stellen mit einem reduzierten Bauraum im Fahrzeug positioniert werden. Dabei verfügen sie über transparente Abdeckungen oder Linsen, welche im Außenbereich des Fahrzeugs angebracht sind und gereinigt werden müssen. Zuverlässigkeit der Reinging und Sparsamkeit im Verbrauch des Reinigungsmittels haben dabei eine herausragende Bedeutung.

Daraus ergeben sich für eine Reinigungsvorrichtung neben den aerodynamischen und ästhetischen Gründen weitere besondere Anforderungen wie beispielsweise Miniaturisierung, eine möglichst exakte und präzise Ausrichtung des Reinigungsstrahls, eine schnelle Funktionsbereitschaft, eine verringerte Nachlaufneigung des Reinigungsfluids, eine verbesserte Anpassbarkeit an unterschiedliche Einbaupositionen. Dabei soll die Reinigungsvorrichtung möglichst einfach aufgebaut und kostengünstig herstellbar sein.

Bekannte Reinigungsvorrichtungen mit Hubkolben können solche Anforderungen nicht oder nur unzureichend erfüllen.

Beispielsweise aus DE 10 2004054230 A1 ist eine verdrehgesicherte Hubdüse bekannt, welche zu diesem Zweck an der radialen Außenseite eines fluidführenden Hubkolbens vier um jeweils 90° versetzt ausgebildeten Längsrippen aufweist, die im Eingriff mit vier korrespondierenden Längsnuten stehen. Die Längsnuten sind in ein Führungsbund am Gehäuse eingeformt, welcher zur Führung und Abstützung des Hubkolbens dient. Eine solche Konstruktion verursacht jedoch wegen der vergrößerten trockenen Kontaktoberfläche erhöhte Reibung und Verschleiß, zudem können aufgrund der vergrößerten Spaltlänge am Führungsbund mehr Feuchtigkeit und Schmutz in das Gehäuse eindringen und auf Dauer Funktionsbeeinträchtigungen verursachen.

Vor diesem Hintergrund liegt der Erfindung die Aufgabe zugrunde, eine verbesserte Reinigungsvorrichtung anzubieten, welche für auf die Reinging von optischen und optoelektronischen Sensoreinrichtungen geeignet ist und die vorgenannten speziellen Anforderungen möglichst optimal erfüllt.

Diese Aufgabe wird durch die Reinigungsvorrichtung mit Merkmalskombination nach Anspruch 1 gelöst. Weiterbildungen und verschiedene Ausführungsbeispiele der Erfindung ergeben sich aus den Unteransprüchen und der nachfolgenden Beschreibung und Figuren.

Die Erfindung sieht vor, dass die Reinigungsvorrichtung wenigstens ein Führungsmittel zur Verdrehsicherung des Hubkolbens um die Betätigungsachse während seines gesamten Hubes aufweist, welches zumindest bereichsweise im Innenkanal angeordnet ist.

Dadurch kann eine exakte und dauerhaft präzise Ausrichtung des Sprühstrahls ohne gesonderte Anbauteile realisiert und Serviceaufwand reduziert werden.

Das Führungsmittel ist hierbei als wenigstens eine Nut und wenigstens ein darin geführter Vorsprung ausgebildet. Besonders einfach, formhaltig, robust und zuverlässig kann der Vorsprung mit einer rippenförmigen Gestalt hergestellt werden.

Die Erfindung sieht weiter vor, dass die Reinigungsvorrichtung ein gegenüber Gehäuse hydraulisch abgedichtetes, insbesondere einteilig gestaltetes Anschlussstück aufweist, an dem ein Anschlussstutzen zum Anschließen einer Zuleitung und ein Dorn, welches in den Innenkanal eintaucht, ausgebildet sind, wobei der Hubkolben mit dem Anschlussstück zur Verdrehsicherung interagiert und wobei der Anschlussstutzen besonders bevorzugt koaxial mit dem Dorn positioniert ist.

Durch eine derartig hochintegrierte Bauweise können zudem die Abmessungen besonders klein gehalten sowie Anzahl der Bauteile reduziert werden.

Zwecks einer effektiven Erfüllung einer robusten sowie dauerhaft genauen Sperrventilfunktion ist es vorgesehen, dass der Innenkanal zumindest bereichsweise als eine Art Stufenbohrung mit einer eingangsseitig angeordneten Vorkammer und einem in die Vorkammer mündenden Bohrung mit einem kleineren Durchmesser ausgebildet ist und wobei ein Dichtelement zur Abdichtung des Dorns gegenüber der Bohrung derart vorgesehen ist, dass der Innenkanal beim Eintauchen des Dorns in die Bohrung hydraulisch unpassierbar und beim herausführen des Dorns aus der Bohrung hydraulisch passierbar ist.

Das erfindungsgemäße Führungselement kann besonders einfach und bauraumsparend realisiert werden, indem in der Innenwandung der Vorkammer wenigstens eine Nut und am Anschlussstück wenigstens ein mit der Nut zusammenwirkender Vorsprung vorgesehen werden.

Für eine besonders exakte Ventilfunktion und damit einhergehende besonders schnelle Schaltbarkeit und Reaktionsgeschwindigkeit der Reinigungsvorrichtung endet die Nut beziehungsweise Nuten gemäß Erfindung in einem definierten axialen Abstand zu Mündungsstelle der Bohrung in der Vorkammer.

Um wahlweise unterschiedliche jedoch exakt definierte Sprührichtungen mit denselben Komponenten realisieren zu können sieht eine bevorzugte Weitebildung der Erfindung vor, dass in der Innenwandung der Vorkammer mehrere, insbesondere regelmäßig in Umfangsrichtung zueinander beabstandeten parallel zueinander verlaufenden Nuten angeordnet werden.

Zwecks vorteilhaften Verringerung der Außenabmessungen und verbesserte Verbaubarkeit sieht die Erfindung vor, dass das Anschlussstück derart dimensioniert und mit dem Gehäuse verbunden ist, dass es in radiale Richtung vollständig innerhalb einer Kontur befindet, welche durch eine Außenkontur vom Gehäuse im Bereich der Verbindung definiert ist.

Gemäß der bevorzugten Ausführungsform kann das Anschlussstück besonders montagegünstig in radiale Richtung vollständig innerhalb vom Gehäuse aufgenommen, insbesondere in das Gehäuse gesteckt sein.

Hierbei sieht eine im Hinblick auf effektive und sichere Montage besonders bevorzugte Weiterbildung vor, dass die Verbindung zwischen dem das Anschlussstück und Gehäuse wenigstens ein Rastelement umfasst, welches in axiale Richtung einen Formschluss erzeugt.

Eine bevorzugte Ausführungsform der Erfindung sieht weiterhin vor, dass die Sprühdüse einteilig in dem Hubkolben integriert ausgebildet ist, wodurch die Anzahl von Bauteilen und Montageschritten weiter reduziert und Montagefehler vermieden werden.

Zum Erzielen einer ästhetischen und/oder einer aerodynamischen Wirkung kann innerhalb der Erfindung am Hubkolben ausgangsseitig ein Abdeckelement angeordnet sein.

Für eine effektive Führung und Abstützung des Hubkolbens sieht die Erfindung vor, dass am Gehäuse ein axial inwärts gerichteter Kragen ausgebildet ist, welcher den Hubkolben radial außen umschließt und im ausgefahrenen Zustand als ein Anschlag zur Festlegung der Hubhöhe dient. Durch Variation der Kragenlänge kann zudem die Hubhöhe konstruktiv besonders einfach angepasst werden.

Weitere Merkmale, Vorteile und Anwendungsmöglichkeiten der Erfindung gehen aus der nachfolgenden Beschreibung hervor. Hierbei zeigen:
Fig.1 eine räumliche Darstellung einer ersten erfindungsgemäßen Ausführungsform in einer unbetätigten Ausgangsposition (a) sowie betriebsbereiten Sprühposition (b) mit dem ausgefahrenen Hubkolben.
Fig.2 eine nicht erfindungsgemäße Ausführungsform in Längsschnitt.
Fig.3 eine weitere nicht erfindungsgemäße Ausführungsform in Längsschnitt.
Fig.4 Darstellung der Funktionsweise am Beispiel der Ausführung gemäß Fig.2.
Fig.5 die Ausführungsform gemäß Fig.1 in Längsschnitt.
Fig.6 eine Ausführungsform des Hubkolbens in Längsschnitt.
Fig.7 eine Ausführungsform des Anschlussstücks in Längsschnitt.
Fig.8-9 verschiedene Ausführungen des Hubkolbens mit jeweils unterschiedlichen Anzahl und Position der Nuten.
Fig.10-12 verschiedene Ausführungen des Anschlussstücks mit jeweils unterschiedlichen Anzahl und Position der rippenförmigen Vorsprünge.

### Fig.1

Die erfindungsgemäße Reinigungsvorrichtung 1 verfügt über ein Gehäuse 2 mit einem darin angeordneten Hubkolben 3. Dieser ist entlang einer Betätigungsachse A aus einer unbetätigten eingefahrenen Ausgangsposition (a) in eine ausgefahrene Reinigungsposition (b) verfahrbar. Eine hier nicht gezeigte Fördereinrichtung befördert das Reinigungsfluid unter Druck über eine ebenfalls nicht gezeigte Zuleitung zur Reinigungsvorrichtung 1. Das Reinigungsfluid wird eingangsseitig unter Druck über einen konzentrisch zu der Betätigungsachse A angeordneten Anschlussstutzen 10 in die Reinigungsvorrichtung 1 eingeleitet, verschiebt den Hubkolben 3 in seine ausgefahrene Position (b) und wird im ausgefahrenen Zustand durch eine endseitig am Hubkolben 3 angeordnete Sprühdüse 5 auf die zu reinigende Oberfläche ausgeschieden. Als Reinigungsfluid eignen sich insbesondere wässrige Gemische, eine Verwendung von Luft oder Luft-Flüssigkeitsgemischen ist jedoch Innerhalb der Erfindung ebenfalls möglich. Bei der gezeigten Ausführungsform dienen zwei endseitig am Gehäuse 2 ausgebildeten Befestigungslaschen 21 zur Befestigung der Reinigungsvorrichtung 1 im Fahrzeug. Des Weiteren ist am Hubkolben 3 endseitig mittels Rastverbindung 25 ein Abdeckelement 18 angebracht. Das Abdeckelement 18 dient im eingefahrenen Zustand zum Verdecken einer Öffnung im Karosserieblech oder in einem Fahrzeuganbauteil, welche zum Herausfahren des Hubkolbens 3 erforderlich ist.

### Fig.2

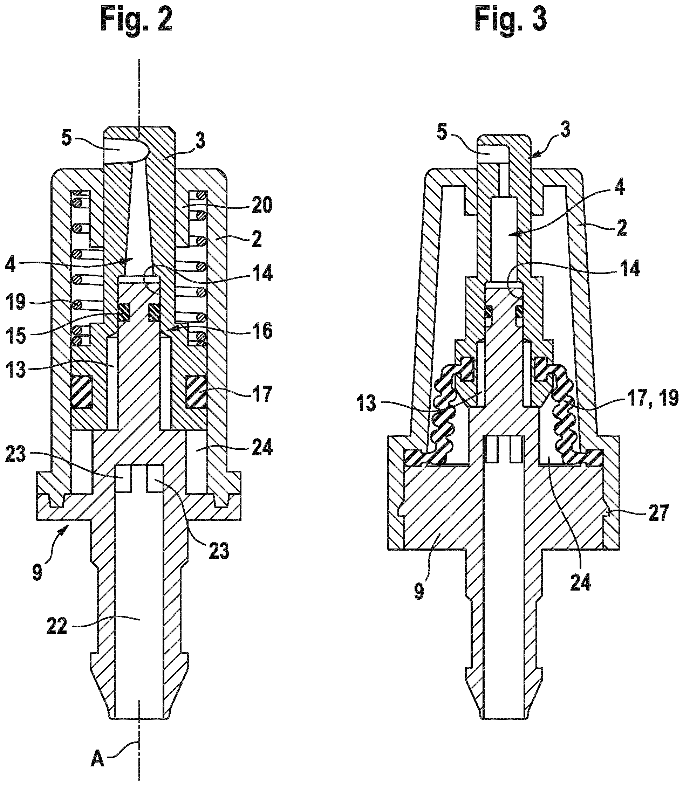

In der Fig.2 ist eine besonders miniaturisierte Ausführungsform einer Reinigungsvorrichtung 1 dargestellt.

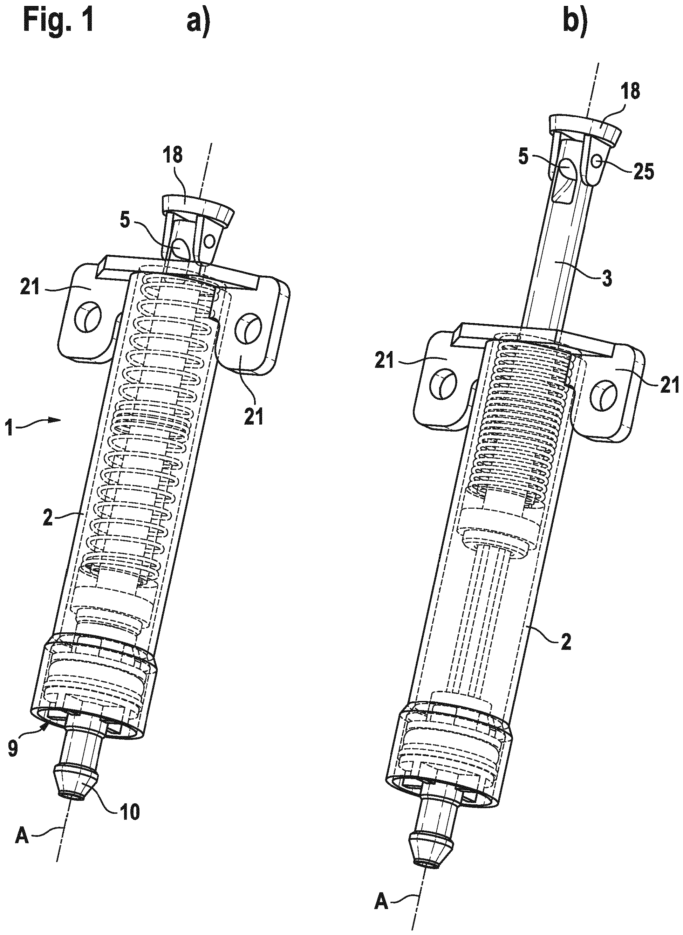

Das Gehäuse 2 der Reinigungsvorrichtung 1 ist einteilig und im Wesentlichen becherförmig ausgebildet. Seine Öffnungsseite ist mit einem Anschlussstück 9 hydraulisch dicht verschlossen. In der gezeigten Ausführungsform ist dies stoffschlüssig durch Verschweißen ausgeführt. In anderen Ausführungsformen, beispielsweise gemäß Fig.1, 3 oder 5 ist dies mittels einer kraft-formschlüssigen Rastverbindung sowie einer zwischengeklemmten Dichtung realisiert.

In dem Gehäuse 2 ist ein entlang der Betätigungsachse A verfahrbar gelagerter Hubkolben 3 angeordnet, welcher das Gehäuse 2 durch einen Durchbruch in seinem Boden durchragt. In dem hier gezeigten unbetätigten, eingefahrenen Ausgangszustand wird der Hubkolben 3 durch eine am Gehäuseboden abgestützte Rückstellfeder 19 gegen das Anschlussstück gepresst.

Ein am Gehäuseboden ausgebildeter, inwärts in axiale Richtung gestreckter Kragen 20 dient zur präzisen Führung und sicheren Abstützung des Hubkolbens 3, insbesondere zur Aufnahme von den beim Sprühvorgang in der ausgefahrenen Position entstehenden Reaktionskräften, wodurch unerwünschte Auslenkung des Sprühstrahls verhindert wird. Darüber hinaus dient der Kragen 20 als ein axialer Anschlag und definiert die Endlage des Hubkolbens 3 im ausgefahrenen Zustand.

Eine Kolbendichtung 17 dichtet den Hubkolben 3 radial gegen die zylindrische Innenwandung vom Gehäuse 2 ab und gleitet beim Hub des Hubkolbens 3 an dieser ab. Dadurch wird im Gehäuseinnenraum eine Druckkammer 24 begrenzt, welche aus einer Fördereinrichtung mit Reinigungsfluid befüllbar ist.

### Fig.3

In der Fig.3 ist eine weitere Ausführungsform dargestellt. Darin ist die Kolbendichtung 17 als ein Faltenbalg aus einem elastischen Werkstoff gestaltet. Der Faltenbalg ist an einem Ende am Hubkolben 3 und an seinem anderen Ende zwischen dem Gehäuse 2 und dem Anschlussstück 9 hydraulisch dicht geklemmt, womit er auch die Druckkammer 24 begrenzt.

Die Elastizität des Faltenbalgs wird zum Rückversetzen des Hubkolbens 3 eingesetzt, wodurch auf eine gesonderte Rückstellfeder 19 verzichtet werden kann. Dadurch kann das Gehäuse 2 im Unterschied zu Ausführungen nach Fig. 1 und 2 besonders herstelloptimiert konisch statt zylindrisch gestaltet werden. Die Entformung aus dem Herstellwerkzeug wird begünstig und Anforderungen an die Oberfläche der Gehäuseinnenseite sind mangels Gleitfunktion geringer.

Eine gesonderte Rückstellfeder 19 kann auch zusammen mit dem Faltenbalg eingesetzt werden, wenn beispielsweise eine durch den Faltenbalg erzeugbare Rückstellkraft alleine nicht ausreicht oder eine besonders schnelle Kolbenrückstellung erwünscht ist.

### Fig.4

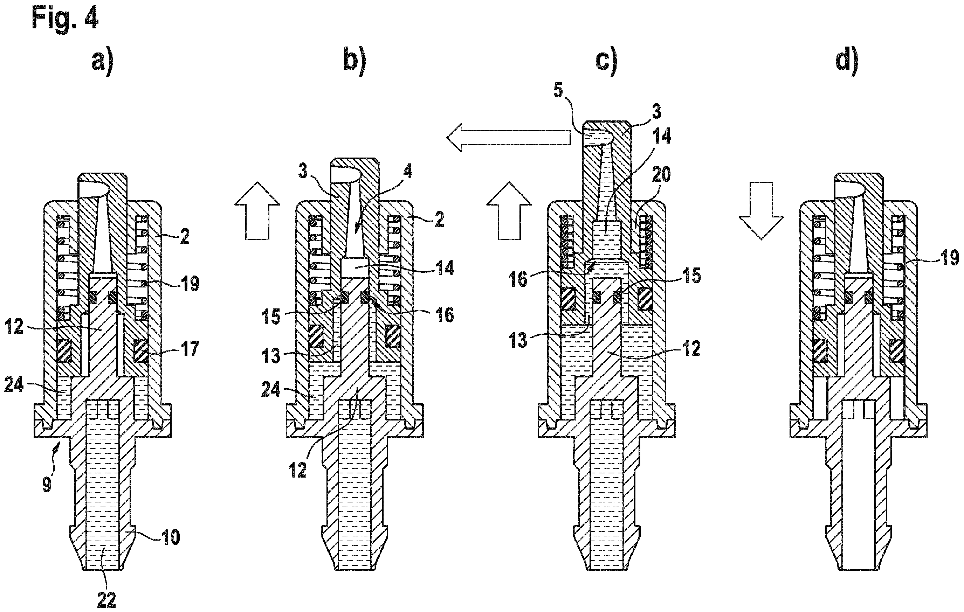

In der Fig.4 wird die Funktionsweise der Reinigungsvorrichtung 1 gemäß Fig.2 vereinfacht dargestellt.
a) Im unbetätigten Ausgangszustand liegt der Hubkolben 3 axial auf dem Anschlussstück 9 auf. Wird bei Aktivierung einer (nicht gezeigten) Fördereinrichtung die Druckkammer 24 über mit Reinigungsfluid gefüllt und darin beginnt sich ein Druck aufzubauen.
b) Sobald der Druck in der Druckkammer 24 die die Federkraft der Rückstellfeder 19 (und die üblichen tribologischen Einflüsse) übersteigt, wird der Hubkolben 3 in Bewegung versetzt und beginnt, aus dem Gehäuse 2 herauszufahren. Die Rückstellfeder 19 wird dabei komprimiert (beziehungsweise der Faltenbalg gemäß Fig.3 gedehnt).

Am Anschlussstück 9 ist radial mittig ein Dorn 12 ausgebildet, welches endseitig mit einem radial wirkenden Dichtelement 15 versehen ist.

Der Hubkolben 3 weist einen abgestuft ausgebildeten Innenkanal 4 auf, welcher diesen komplett durchbricht und zu einer Sprühdüse 5 führt. In seinem mittleren Abschnitt ist der Innenkanal 4 als sich Bohrung 14 ausgebildet, welche mit dem Dichtelement 15 abdichtend zusammenwirkt. Eingangsseitig mündet die Bohrung 14 in eine Vorkammer 13, deren Durchmesser größer als der Außendurchmesser des Dichtelements 15 ist, so dass dieser darin umströmt werden kann. Die stufenartige Mündungsstelle 16 wirkt dadurch mit dem Dichtelement als ein weggesteuertes Sperrventil, welches in Abhängigkeit von der Position des Hubkolbens 3 den Innenkanal 4 absperrt oder freigibt.

Vorzugsweise ist die Mündungsstelle 16 verrundet oder gefast gestaltet, um Verschleiß des Dichtelements 15 zu reduzieren.

c) Sobald das Dichtelement 15 die Mündungsstelle 16 in Richtung Vorkammer 16 überfährt, wird der Innenkanal 4 komplett entsperrt, das Reinigungsfluid gelangt zur Sprühdüse 5 und tritt als Sprühstrahl aus der Sprühdüse 5 heraus.

Durch den Druck des Reinigungsfluids bewegt sich Hubkolben 3 solange weiter, bis er am Kragen 20 anschlägt. Durch Auslegung der Anschlagposition in Kombination mit Querschnitt und Länge des Innenkanals kann erreicht werden, dass der Sprühstrahl simultan mit dem Anschlag des Hubkolbens 3 am Kragen 20 aus der Sprühdüse heraustritt, wodurch eine gezielte, verbrauchsarme Reinigung eines eng begrenzten Bereichs begünstigt wird.

d) Wird ein Nachströmen des Reinigungsfluids in die Reinigungsvorrichtung 1 beispielsweise durch Abschalten der Fördereinrichtung oder Absperren der Zuleitung durch ein geeignetes Absperraggregat unterbunden, baut sich der Druck ab und der Hubkolben 3 wird durch die Kraft der komprimierten Rückstellfeder 19 wieder in seine eingefahrene Ausgangsstellung zurückgeschoben und in einen axialen Anschlag mit dem Anschlussstück 9 gebracht.

### Fig.5

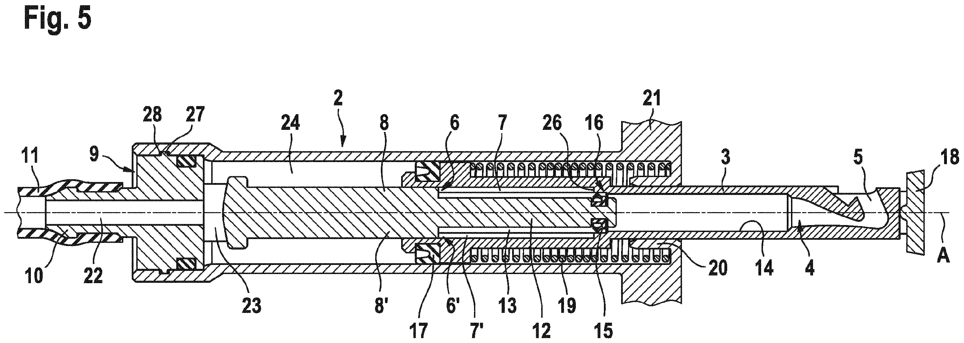

In der Fig.5 ist die bevorzugte Ausführung der Reinigungsvorrichtung 1 gemäß Fig.1 in Längsschnitt vergrößert dargestellt.

Das Gehäuse 2 der Reinigungsvorrichtung 1 ist im Wesentlichen zylindrisch gestaltet und eingangsseitig mit einem Anschlussstück 9 verschlossen. Die Verbindungsstelle ist hydraulisch dicht ausgeführt. In radiale Richtung befindet sich das Anschlussstück 9 vollständig innerhalb einer Kontur, welche von der Außenhülle des Gehäuses 2 im Bereich der Verbindung definiert ist.

In der gezeigten Ausführungsform ist das Anschlussstück 9 in das Gehäuse 2 wie eine Art Stopfen gesteckt und mittels eines Rastelements 27 verrastet. Das Rastelement 27 ist wulst- beziehungsweise kragenförmig ausgebildet und greift in eine korrespondierende Radialnut unter Bildung eines axial wirkenden Formschlusses ein. Die Wirkpaarung Rastelement 27/Radialnut 28 kann innerhalb der Erfindung wie dargestellt oder radial umgekehrt mit der Radialnut 28 im Anschlussstück 9 und dem Rastelement 27 am Gehäuse 2 vorgesehen sein. Ebenso kann das Rastelement 27 in Form von mehreren über den Umfang zueinander beabstandet angeordneten einzelnen Vorsprüngen ausgebildet sein.

Das Anschlussstück 9 ist einteilig ausgebildet und verfügt eingangsseitig über einen radial mittig angeordneten Anschlussstutzen 10 zum Anschließen einer Zuleitung 11 für das Reinigungsfluid. Ain innerhalb des Anschlussstutzens 10 ausgebildeter Zuleitungskanal 22 mündet in eine Querverbindung 23, wodurch eine schnelle und gleichmäßige Speisung der Druckkammer 24 erreicht wird.

Ausgangsseitig ist am Anschlussstück 9 konzentrisch zum Anschlussstutzen 10 ein Dorn 12 ausgebildet, welches in allen Betriebszuständen in den Innenkanal 4 des Hubkolbens 3 eintaucht. Im Bereich des Dornendes ist am Dorn 12 ein Dichtelement 15 angeordnet.

Der den Hubkolben 3 durchdringender Innenkanal 4 weist in seinem Verlauf mehrere unterschiedlich gestalteten Abschnitte auf. Eingangsseitig weist der Innenkanal 4 eine vergleichsweise breite, zylindrische Vorkammer (13) mit einem Durchmesser größer als der Außendurchmesser des Dichtelements 15.

In seinem mittleren Abschnitt weist der Innenkanal 4 eine Bohrung 14 auf, deren Durchmesser für eine abdichtende Wirkung mit dem Dichtelement 15 dimensioniert und somit kleiner als der Durchmesser der Vorkammer 13 ist. Die Bohrung 14 mündet in die Vorkammer 13 unter Bildung einer Stufe an der Mündungsstelle 16. Die Mündungsstelle 16 kann innerhalb der Erfindung vorzugsweise gefast, verrundet oder andersartig geglättet ausgebildet sein. Im Zusammenspiel mit der Mündungstelle16 wirkt der Dorn 12 mit dem Dichtelement 15 wie ein Ventilkörper, welcher beim Eintauchen in die Bohrung 14 den Innenkanal 4 hydraulisch dicht absperrt.

Ausgangsseitig verfügt der Hubkolben 3 über eine Sprühdüse 5. In der gezeigten Ausführungsform ist die Sprühdüse 5 einteilig mit dem Hubkolben 3 als ein speziell ausgeformter Sprühkanal am Ende des Innenkanals 4 ausgebildet. Innerhalb der Erfindung kann die Sprühdüse 5 jedoch auch als ein konventioneller separater Sprüheinsatz zum Verbinden mit dem Hubkolben 3 vorgesehen sein.

Des Weiteren ist ein Abdeckelement 18 ausgangsseitig über eine Rastverbindung 25 mit dem Hubkolben 3 verbunden. Das Abdeckelement 18 kann primär zum unauffälligen Verschließen einer für den Hubkolben benötigten Öffnung am Einbauort der Reinigungsvorrichtung 1 dienen, kann jedoch auch zum Setzen von bestimmten Designakzenten verwendet werden.

In der Innenwandung der Vorkammer 13 sind im Hubkolben 3 mehrere axial gestreckte Nuten 7,7' angeordnet. Am Dorn 12 sind rippenförmige radiale Vorsprünge 8,8' ausgebildet, welche in allen Betriebszuständen zumindest bereichsweise in jeweils korrespondierenden Nuten 7,7' eingreifen. Dadurch ist zwischen dem Anschlussstück 9 und dem Hubkolben 3 ein in Umfangsrichtung wirkender Formschluss gebildet, welcher eine gegenseitige Verdrehung unterbindet und so eine definierte unveränderte Ausrichtung des Hubkolbens 3 mit Sprühdüse 5 in Bezug auf die Reinigungsvorrichtung 1 stets sicherstellt. Zugleich wird auch die Axialführung des Hubkolbens 3 verbessert.

Die Vorsprünge 8 müssen innerhalb der Erfindung nicht zwangsweise wie abgebildet rippenförmig axial gestreckt gestaltet sein. Ebenso können sie mit geringer axialer Streckung beispielsweise laschen-, flügel-, oder stiftförmig ausgebildet sein.

Die im Eingriff mit den Nuten 7,7'stehenden radialen Vorsprünge 8,8' definieren somit Führungsmittel 6, 6' zur Führung und Verdrehsicherung des Hubkolbens (3).

Alle Nuten 7,7' werden nicht bis zu Mündungsstelle 16 geführt, sondern laufen in einem definierten axialen Abstand zu dieser aus (siehe Nutende 26). Dadurch wird für die Ventilfunktion eine klar definierte kreisförmige Steuerkante erhalten. Des Weiteren kann sich die durch Führungsmittel 6, 6' gestörte Strömung in dem der Mündungsstelle 16 vorgelagerten zylindrischen Abschnitt beruhigen, wodurch die Umschaltung zwischen der Ausgangs- und der Sprühposition des Hubkolbens 3 insgesamt beschleunigt wird.

### Fig.6

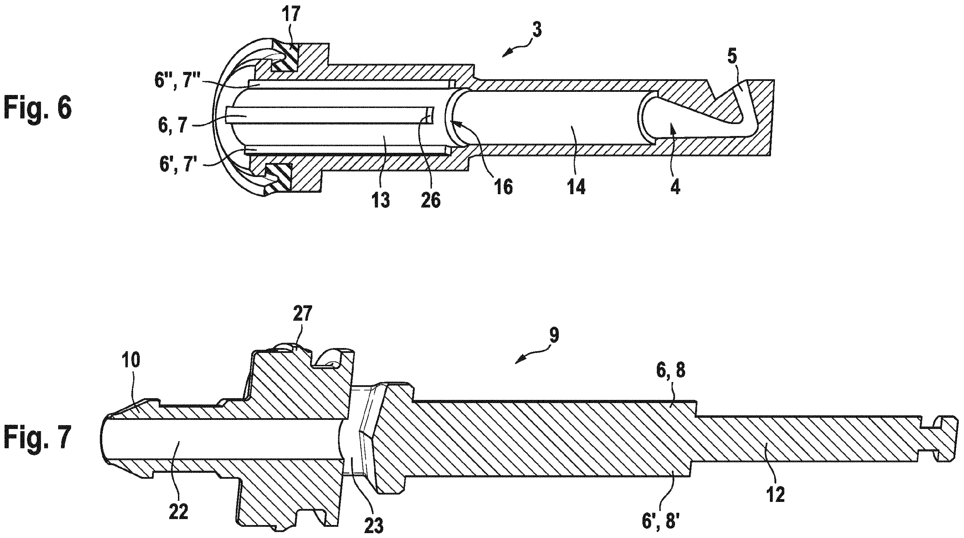

In der Fig.6 ist eine bevorzugte Ausführungsform des Hubkolbens 3 gemäß außerhalb des Zusammenbaus in Längsschnitt dargestellt. Bei dieser Ausführung verfügt der Innenwandung der Vorkammer 13 mehrere über vier gleichmäßig in Umfangsrichtung zueinander beabstandeten Nuten 7.

Verdeutlicht wird hierbei auch der axiale Abstand zwischen dem Nutende 26 und der Mündungsstelle 16.

### Fig.7

Fig. 7 zeigt das Anschlussstück 9 gemäß Fig.5 außerhalb des Zusammenbaus in Längsschnitt zu Verdeutlichung der bereits vorstehend beschriebenen Konstruktionselemente und Merkmale.

### Fig.8 bis 9

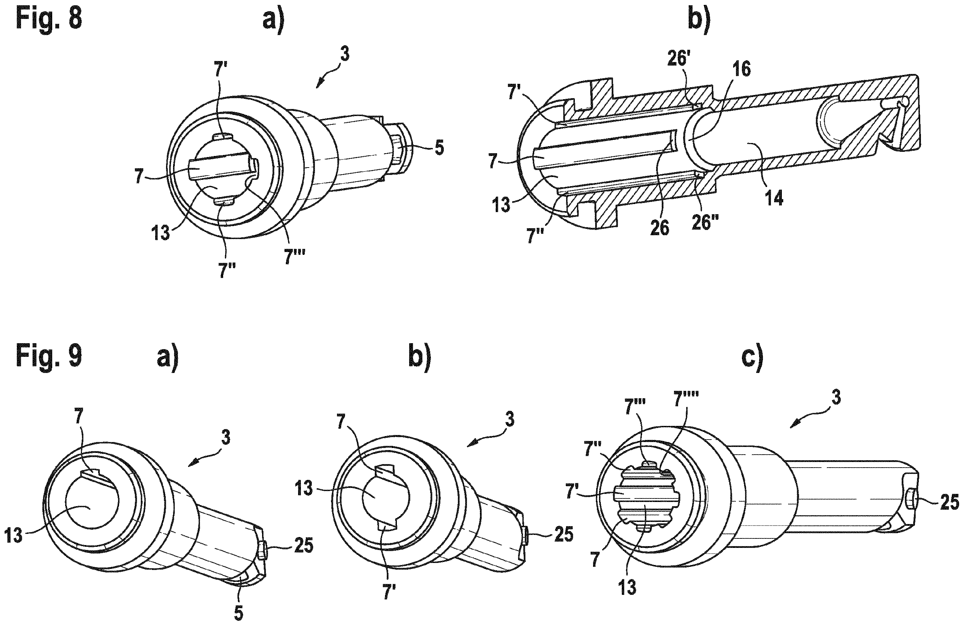

In den Fig.8-9 werden unterschiedliche Ausführungsbespiele des Hubkolbens 3 dargestellt, die sich im Wesentlichen in Anzahl und Positionierung der Nuten 7,... unterscheiden.

### Fig.10 bis 12

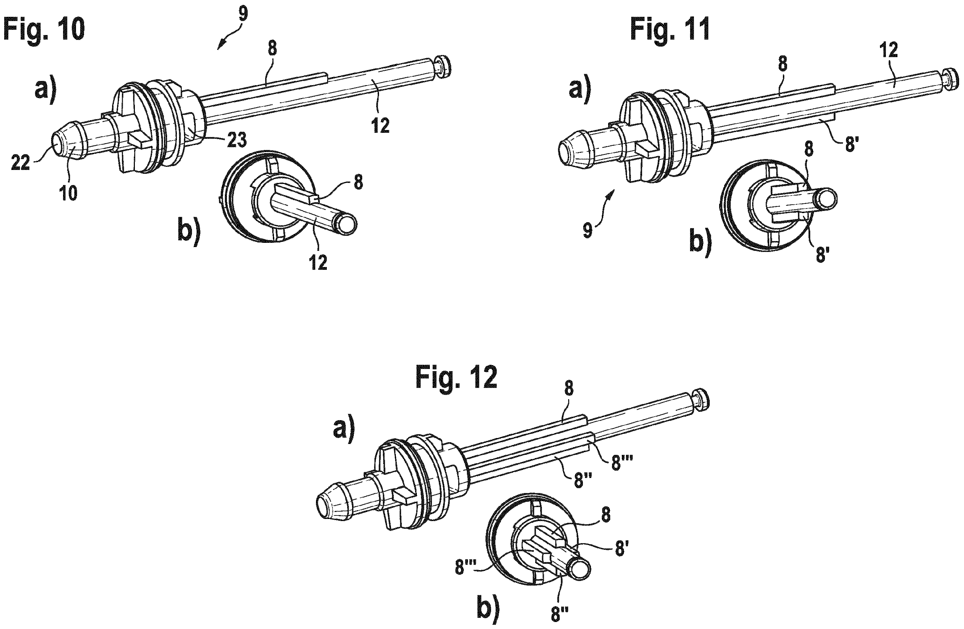

In den Fig. 10-12 werden unterschiedliche Ausführungsbespiele des Anschlussstücks 9 dargestellt, die sich im Wesentlichen in Anzahl und Positionierung der Vorsprünge 8,... unterscheiden.

Die erfindungsgemäße Reinigungsvorrichtung 1 kann als ein Baukastensystem realisiert werden, mit dem durch gezielte Kombinationen von bestimmten Ausführungen von Hubkolben 3 beziehungsweise Anschlussstücken 9 und /oder Gehäusen 2 die resultierende Reinigungsvorrichtung 1 flexibel für unterschiedliche Zwecke optimiert werden kann.

So kann beispielsweise durch Kombination des Hubkolbens 3 nach Fig.9a mit dem Anschlussstück 9 nach Fig.10a konstruktiv eine einzige bestimmte Ausrichtung der Sprühdüse 5 festgelegt und Montagefehler vermieden.

Demgegenüber kann beispielsweise mit der Kombination des Hubkolbens 3 nach Fig.9c mit dem Anschlussstück 9 nach Fig.10a mit denselben Teilen mehrere Ausrichtungen der Sprühdüse 5 realisiert werden, um zum Beispiel unterschiedliche Verbauorte bedienen zu können.

Durch die Verwendung von Varianten von Gehäusen 2 mit unterschiedlich lang ausgebildeten Kragen 20 kann die Hubhöhe effektiv beeinflusst werden.

### Bezugszeichenliste

- 1: Reinigungsvorrichtung
- 2: Gehäuse
- 3: Hubkolben
- 4: Innenkanal
- 5: Sprühdüse
- 6: Führungsmittel
- 7: Nut
- 8: Vorsprung
- 9: Anschlussstück
- 10: Anschlussstutzen
- 11: Zuleitung
- 12: Dorn
- 13: Vorkammer
- 14: Bohrung
- 15: Dichtelement
- 16: Mündungsstelle
- 17: Kolbendichtung
- 18: Abdeckelement
- 19: Rückstellfeder
- 20: Kragen
- 21: Befestigungslasche
- 22: Zuleitungskanal
- 23: Querverbindung
- 24: Druckkammer
- 25: Rastverbindung
- 26: Nutende
- 27: Rastelement
- 28: Radialnut
- A: Betätigungsachse

## Patentansprüche

1. Reinigungsvorrichtung (1) für ein Kraftfahrzeug, mit einem Gehäuse (2), einem in dem Gehäuse (2) druckgesteuert verfahrbaren Hubkolben (3), welcher entlang einer Betätigungsachse (A) aus einer eingefahrenen Ausgangsposition in eine ausgefahrene Reinigungsposition verfahrbar ist, wobei der Hubkolben (3) einen Innenkanal (4) zum Transport eines Reinigungsfluids durch den Hubkolben (3) hindurch zu einer Sprühdüse (5) aufweist, wobei die Reinigungsvorrichtung (1) ein gegenüber Gehäuse (2) hydraulisch abgedichtetes Anschlussstück (9) aufweist, wobei das Anschlussstück (9) einen Anschlussstutzen (10) zum Anschließen einer Zuleitung (11) für das Reinigungsfluid und einen Dorn (12) umfasst, welches in den Innenkanal (4) eintaucht, wobei der Innenkanal (4) zumindest bereichsweise als eine Art Stufenbohrung mit einer eingangsseitig angeordneten Vorkammer (13) mit einem größeren Durchmesser und einer in die Vorkammer (13) mündenden Bohrung (14) mit einem kleineren Durchmesser ausgebildet ist und ein Dichtelement (15) zur Abdichtung des Dorns (12) gegenüber der Bohrung (14) derart vorgesehen ist, dass der Innenkanal (4) beim Eintauchen des Dorns (12) in die Bohrung (14) hydraulisch unpassierbar und beim herausführen des Dorns (12) aus der Bohrung (14) hydraulisch passierbar ist, **dadurch gekennzeichnet, dass** der Hubkolben (3) mit dem Anschlussstück (9) als ein Führungsmittel (6) und zugleich zur Verdrehsicherung um die Betätigungsachse (A) während seines gesamten Hubes interagiert, indem in der Innenwandung der Vorkammer (13) wenigstens eine axial gestreckte Nut (7) und am Anschlussstück (9) wenigstens ein in der Nut (7) geführter Vorsprung (8) ausgebildet sind.

2. Reinigungsvorrichtung (1) nach Anspruch 1 **dadurch gekennzeichnet, dass** der Vorsprung (8) rippenförmig ausgebildet ist.

3. Reinigungsvorrichtung (1) nach wenigstens einem der vorstehenden Ansprüche **dadurch gekennzeichnet, dass** die Nut (7) in Richtung Bohrung (14) in einem definierten axialen Abstand zu Mündungsstelle (15) der Bohrung (14) in die Vorkammer (13) endet.

4. Reinigungsvorrichtung (1) wenigstens einem der vorstehenden Ansprüche **dadurch gekennzeichnet, dass** in der Innenwandung der Vorkammer (13) mehrere, insbesondere regelmäßig in Umfangsrichtung zueinander beabstandeten Nuten (7) angeordnet sind.

5. Reinigungsvorrichtung (1) nach wenigstes einem der vorstehenden Ansprüche **dadurch gekennzeichnet, dass** das Anschlussstück (9) in radiale Richtung vollständig innerhalb einer Kontur angeordnet ist, welche durch eine Außenkontur vom Gehäuse (2) im Bereich der Verbindung definiert ist.

6. Reinigungsvorrichtung (1) nach Anspruch 5 **dadurch gekennzeichnet, dass**
das Anschlussstück (9) in radiale Richtung vollständig innerhalb vom Gehäuse (2), insbesondere in das Gehäuse (2) gesteckt angeordnet ist

7. Reinigungsvorrichtung (1) nach wenigstes einem der Ansprüche 5 oder 6
**dadurch gekennzeichnet, dass** die Verbindung zwischen dem Anschlussstück (9) und dem Gehäuse (2) wenigstens ein Rastelement (27) umfasst, welches in axiale Richtung einen Formschluss erzeugt.

8. Reinigungsvorrichtung (1) nach wenigstes einem der vorstehenden Ansprüche **dadurch gekennzeichnet, dass** der Anschlussstutzen (10) koaxial mit dem Dorn (12) und einteilig mit dem Anschlussstück (9) ausgebildet sind.

9. Reinigungsvorrichtung (1) nach wenigstes einem der vorstehenden Ansprüche **dadurch gekennzeichnet, dass** die Sprühdüse (6) einteilig in dem Hubkolben (3) integriert ausgebildet ist.

10. Reinigungsvorrichtung (1) nach wenigstes einem der vorstehenden Ansprüche **dadurch gekennzeichnet, dass** an dem Hubkolben (3) ausgangsseitig ein Abdeckelement (18) zum Erzielen einer ästhetischen und/oder einer aerodynamischen Wirkung angeordnet ist.

11. Reinigungsvorrichtung (1) nach wenigstes einem der vorstehenden Ansprüche **dadurch gekennzeichnet, dass** das Gehäuse (2) ein axial inwärts gerichteter Kragen (20) ausgebildet ist, welcher für den Hubkolben (3) im ausgefahrenen Zustand als ein Anschlag dient und den Hubkolben (3) in radiale Richtung stützt.

## Claims

1. Cleaning apparatus (1) for a motor vehicle, having a housing (2), having a reciprocating piston (3) which is movable in a pressure-controlled manner in the housing (2) and which is movable from a retracted initial position into a deployed cleaning position along an actuation axis (A), wherein the reciprocating piston (3) has an inner channel (4) for transporting a cleaning fluid through the reciprocating piston (3) to a spray nozzle (5), wherein the cleaning apparatus (1) has a connection piece (9) which is sealed off hydraulically with respect to the housing (2), wherein the connection piece (9) comprises a connector (10) for connection of a feed line (11) for the cleaning fluid and comprises a mandrel (12) which projects into the inner channel (4), wherein the inner channel (4) is formed at least regionally as a type of stepped bore, with a pre-chamber (13) which is arranged at the inlet side and has a relatively large diameter, and with a bore (14) which opens out into the pre-chamber (13) and has a relatively small diameter, and a sealing element (15) for sealing off the mandrel (12) with respect to the bore (14) is provided such that the inner channel (4) cannot be passed through hydraulically when the mandrel (12) projects into the bore (14), and can be passed through hydraulically when the mandrel (12) has been guided out of the bore (14), **characterized in that** the reciprocating piston (3) interacts with the connection piece (9) as a guide means (6) and at the same time for preventing rotation about the actuation axis (A) during its entire stroke **in that** at least one axially extended groove (7) is formed in the inner wall of the pre-chamber (13) and at least one projection (8) which is guided in the groove (7) is formed on the connection piece (9).

2. Cleaning apparatus (1) according to Claim 1, **characterized in that** the projection (8) is of rib-like form.

3. Cleaning apparatus (1) according to at least one of the preceding claims, **characterized in that** the groove (7), in the direction of the bore (14), ends with a defined axial spacing to the opening-out point (15) of the bore (14) into the pre-chamber (13).

4. Cleaning apparatus (1) according to at least one of the preceding claims, **characterized in that** multiple grooves (7), which are in particular spaced apart from one another in a regular manner in the circumferential direction, are arranged in the inner wall of the pre-chamber (13).

5. Cleaning apparatus (1) according to at least one of the preceding claims, **characterized in that** the connection piece (9), in the radial direction, is arranged completely within a contour which is defined by an outer contour of the housing (2) in the region of the connection.

6. Cleaning apparatus (1) according to Claim 5, **characterized in that** the connection piece (9), in the radial direction, is arranged completely within the housing (2), in particular is arranged so as to be plugged into the housing (2).

7. Cleaning apparatus (1) according to at least either of Claims 5 and 6, **characterized in that** the connection between the connection piece (9) and the housing (2) comprises at least one latching element (27) which produces a form fit in the axial direction.

8. Cleaning apparatus (1) according to at least one of the preceding claims, **characterized in that** the connector (10) is formed coaxially with respect to the mandrel (12) and integrally with the connection piece (9).

9. Cleaning apparatus (1) according to at least one of the preceding claims, **characterized in that** the spray nozzle (6) is formed so as to be integrated integrally in the reciprocating piston (3).

10. Cleaning apparatus (1) according to at least one of the preceding claims, **characterized in that**, on the reciprocating piston (3) at the outlet side, there is arranged a cover element (18) for achieving an aesthetic and/or aerodynamic effect.

11. Cleaning apparatus (1) according to at least one of the preceding claims, **characterized in that** an axially inwardly directed collar (20) is formed on the housing (2) and, for the reciprocating piston (3) in the deployed state, serves as a stop, and supports the reciprocating piston (3) in the radial direction.

## Revendications

1. Dispositif de nettoyage (1) pour un véhicule automobile, comprenant un boîtier (2), un piston alternatif (3) déplaçable dans le boîtier (2) sous l'effet d'une pression, qui est apte à être déplacé le long d'un axe d'actionnement (A) depuis une position initiale rétractée jusqu'à une position de nettoyage sortie, le piston alternatif (3) présentant un canal intérieur (4) pour le transport d'un fluide de nettoyage à travers le piston alternatif (3) jusqu'à une buse de pulvérisation (5), le dispositif de nettoyage (1) présentant une pièce de raccordement (9) rendue hydrauliquement étanche par rapport au boîtier (2), la pièce de raccordement (9) comprenant un embout de raccordement (10) pour le raccordement d'une conduite d'alimentation (11) en fluide de nettoyage et un mandrin (12) qui plonge dans le canal intérieur (4), le canal intérieur (4) étant conçu, au moins par zones, comme une sorte d'alésage étagé avec une préchambre (13) agencée du côté de l'entrée et ayant un diamètre plus grand et un alésage (14) débouchant dans la préchambre (13) et ayant un diamètre plus petit, et un élément d'étanchéité (15) étant prévu pour assurer l'étanchéité du mandrin (12) par rapport à l'alésage (14) de telle sorte que le canal intérieur (4) est hydrauliquement infranchissable lorsque le mandrin (12) pénètre dans l'alésage (14) et hydrauliquement franchissable lorsque le mandrin (12) sort de l'alésage (14), **caractérisé en ce que** le piston alternatif (3) interagit avec la pièce de raccordement (9) en tant que moyen de guidage (6) et en même temps pour empêcher la rotation autour de l'axe d'actionnement (A) pendant toute sa course, **en ce que** dans la paroi intérieure de la préchambre (13) est formée au moins une rainure (7) s'étirant axialement et, sur la pièce de raccordement (9), au moins une saillie (8) guidée dans la rainure (7).

2. Dispositif de nettoyage (1) selon la revendication 1, **caractérisé en ce que** la saillie (8) est réalisée en forme de nervure.

3. Dispositif de nettoyage (1) selon au moins l'une des revendications précédentes, **caractérisé en ce que** la rainure (7) se termine en direction de l'alésage (14) à une distance axiale définie du point d'embouchure (15) de l'alésage (14) dans la préchambre (13).

4. Dispositif de nettoyage (1) selon au moins l'une des revendications précédentes, **caractérisé en ce que** plusieurs rainures (7), en particulier régulièrement espacées les unes des autres dans la direction périphérique, sont agencées dans la paroi intérieure de la préchambre (13).

5. Dispositif de nettoyage (1) selon au moins l'une des revendications précédentes, **caractérisé en ce que** la pièce de raccordement (9) est agencée, dans la direction radiale, entièrement à l'intérieur d'un contour qui est défini par un contour extérieur du boîtier (2) dans la zone de la liaison.

6. Dispositif de nettoyage (1) selon la revendication 5, **caractérisé en ce que** la pièce de raccordement (9) est agencée, dans la direction radiale, entièrement à l'intérieur du boîtier (2), en particulier insérée dans le boîtier (2).

7. Dispositif de nettoyage (1) selon au moins l'une des revendications 5 ou 6, **caractérisé en ce que** la liaison entre la pièce de raccordement (9) et le boîtier (2) comprend au moins un élément d'encliquetage (27) qui produit une liaison par complémentarité de forme en direction axiale.

8. Dispositif de nettoyage (1) selon au moins l'une des revendications précédentes, **caractérisé en ce que** l'embout de raccordement (10) est coaxial au mandrin (12) et est réalisé d'une seule pièce avec la pièce de raccordement (9).

9. Dispositif de nettoyage (1) selon au moins l'une des revendications précédentes, **caractérisé en ce que** la buse de pulvérisation (6) est intégrée au piston alternatif (3), en une seule pièce avec celui-ci.

10. Dispositif de nettoyage (1) selon au moins une des revendications précédentes, **caractérisé en ce qu'**un élément de recouvrement (18) est agencé sur le piston alternatif (3) du côté de la sortie pour obtenir un effet esthétique et/ou aérodynamique.

11. Dispositif de nettoyage (1) selon au moins l'une des revendications précédentes, **caractérisé en ce que** le boîtier (2) est formé d'une collerette (20) orientée axialement vers l'intérieur, qui sert de butée pour le piston alternatif (3) à l'état déployé et soutient le piston alternatif (3) dans la direction radiale.
